# EUROPÄISCHE PATENTANMELDUNG

(11) **EP 2 070 736 A2**
(43) Veröffentlichungstag der Anmeldung: **17.06.2009**
(21) Anmeldenummer: 08105645.9
(22) Anmeldetag: 24.10.2008
(51) Int. Cl.: B60D 1/32

(54) **Anhängevorrichtung mit Stabilisierungseinrichtung zur Vermeidung und/oder Dämpfung von Schlingerbewegungen zwischen einem Zugfahrzeug und einem damit gekoppelten Anhänger**

(30) Priorität: 12.12.2007 DE 102007059900
(71) Anmelder: ROBERT BOSCH GMBH, 70442 Stuttgart (DE)
(72) Erfinder: Verhagen, Armin, 71701, Schwieberdingen (DE)

(57) **Zusammenfassung**

Die Erfindung geht aus von einer Anhängevorrichtung mit Stabilisierungseinrichtung (30) zur Vermeidung und/oder Dämpfung von Schlingerbewegungen zwischen einem Zugfahrzeug (10) und einem damit gekoppelten Anhänger. Die Stabilisierungseinrichtung (30) ist mit einer Reibkupplung ausgestattet, welche die Reibverhältnisse zwischen einer zugfahrzeugseitigen Zugvorrichtung (12) und einem anhängerseitigen Koppelelement (18) beeinflusst.

Erfindungsgemäß wird vorgeschlagen, eine Stabilisierungseinrichtung (30) mit extern ansteuerbarem Elektromotor (34) und einem von diesem beaufschlagten Getriebe (36) zur Betätigung der Reibungskupplung einzusetzen. Das Getriebe (36) ist in Löserichtung der Stabilisierungseinrichtung (30) mit einer Selbsthemmung ausgestattet.

## Beschreibung

### Stand der Technik

Die Erfindung geht aus von einer Anhängevorrichtung mit Stabilisierungseinrichtung zur Vermeidung und/oder Dämpfung von Schlingerbewegungen zwischen einem Zugfahrzeug und einem damit gekoppelten Anhänger entsprechend den gattungsbildenden Merkmalen des Anspruchs 1.

Eine derartige Anhängevorrichtung mit Stabilisierungseinrichtung ist beispielsweise aus der DE 20316698 U1 bereits bekannt. Diese Stabilisierungseinrichtung ist an einer Deichsel eines Anhängers befestigt. Sie weist ein Paar von Reibbremsbelägen auf, die im angekoppelten Zustand des Anhängers gegen eine zugfahrzeugseitige Zugvorrichtung gepresst werden. Die jeweilige Zuspannkraft wird mechanisch oder mittels Hydraulikdruck aufgebracht. Durch die Einstellbarkeit der Zuspannkraft lassen sich die Reibungsverhältnisse zwischen dem Zugfahrzeug und dem Anhänger einmalig beim Anhängen festlegen.

Die DE 3702699 A1 offenbart ebenfalls mechanische, pneumatische oder hydraulische Mittel zur Aufbringung der Zuspannkraft und regt darüber hinaus an, diese Zuspannkräfte in Abhängigkeit von der Fahrgeschwindigkeit des Zugfahrzeugs und/oder von dem Gesamtgewicht der Anhängelast einzustellen.

Hydraulisch und pneumatisch beaufschlagte Stabilisierungseinrichtungen haben jedoch den Nachteil, dass zur Aufrechterhaltung der Zuspannkräfte während des Fahrbetriebs dauerhaft Systemdruck zur Verfügung stehen muss, so dass derartige Systeme demnach von einer permanenten Energiezufuhr abhängig sind. Zudem sind hydraulisch oder pneumatisch beaufschlagte Stabilisierungseinrichtungen nur bei Anhängern wirtschaftlich umsetzbar, die bereits mit einer hydraulischen oder pneumatischen Anhängerbremse ausgestattet sind. Weil eine Mehrzahl von Anhängern jedoch mit mechanischen Anhängerbremsanlagen ausgestattet sind, sind diese Anhänger nicht ohne weiteres für den Einsatz derart betätigbarer Stabilisierungseinrichtungen geeignet.

Mechanisch betätigte Stabilisierungseinrichtungen haben demgegenüber den Vorteil eines kostengünstigeren Aufbaus. Allerdings ist ihre Handhabung für den Fahrer mit physischen Kraftanstrengungen verbunden und wird deshalb als unkomfortabel empfunden. Eine Anpassung der Zuspannkräfte an die momentan vorherrschenden Fahrbetriebsbedingungen ist bei mechanisch arbeitenden Stabilisierungssystemen bislang allenfalls nur in einem unzufrieden stellenden Umfang möglich.

### Offenbarung der Erfindung

Demgegenüber weist eine Anhängevorrichtung mit einer Stabilisierungseinrichtung entsprechend den Merkmalen des Anspruchs 1 den Vorteil auf, dass eine Betätigung der Stabilisierungseinrichtung durch einen Elektromotor mit nachgeschaltetem Getriebe erfolgt. Das Getriebe weist in Löserichtung der Stabilisierungseinrichtung eine Selbsthemmung auf. Damit ist lediglich zum Schließen der Stabilisierungseinrichtung, d. h. zur Erhöhung der Zuspannkraft, Energie aufzubringen, nicht jedoch zum Aufrechthalten der einmal eingestellten Zuspannkraft. Ein unbeabsichtigtes Lösen der Stabilisierungseinrichtung wird durch die Selbsthemmung vermieden.

Weitere Vorteile oder vorteilhafte Weiterbildungen der Erfindung ergeben sich aus den Unteransprüchen und der nachfolgenden Beschreibung.

Elektromotorisch betätigbare Stabilisierungseinrichtungen lassen sich ohne physischen Kraftaufwand mittels eines manuell betätigbaren Bedienteils bedienen. Damit kann der Komfort beim Ankoppeln eines Anhängers an ein Zugfahrzeug verbessert werden und auch physisch weniger belastbare Personen werden dadurch in die Lage versetzt den Ankoppelvorgang durchzuführen.

Zudem lassen sich elektromotorisch betätigbare Stabilisierungseinrichtungen verhältnismäßig einfach in einen elektronischen Steuer- oder Regelkreis einbeziehen. Anhand an sich bekannter Sensoren lassen sich den Fahrzustand eines Gespanns aus einem Zugfahrzeug und einem Anhänger beschreibende Größen einfach ermitteln und einem elektronischen Steuergerät zuführen. Auf die aktuell vorherrschende Zuspannkraft der Stabilisierungseinrichtung kann über den zum Elektromotor fließenden Strom ohne umfangreiche Sensorik zurückgeschlossen werden. Mittels des elektronischen Steuergeräts lassen sich aus diesen Signalen Ansteuersignale generieren, welche eine Anpassung der Zuspannkraft einer Stabilisierungseinrichtung an die Fahrzustände eines Gespanns während des laufenden Fahrbetriebs gestatten.

Zudem eignen sich elektromotorisch betätigte Stabilisierungseinrichtungen zur Nachrüstung für Anhänger, die bislang gar keine Stabilisierungseinrichtung aufweisen. Einschränkungen hinsichtlich der Art eines Anhängerbremssystems bestehen nicht, da alle Anhänger bereits serienmäßig, beispielsweise zum Betrieb ihrer Beleuchtungsanlage, an die Spannungsversorgung des Zugfahrzeugs anschließbar sind.

### Zeichnung

Ausführungsbeispiele der Erfindung sind in der Zeichnung dargestellt und werden in der nachfolgenden Beschreibung ausführlich erläutert.

Die Figur 1 zeigt anhand einer schematisch stark vereinfachten Seitenansicht eine Anhängevorrichtung mit einer elektromechanischen Stabilisierungseinrichtung.

Die Figuren 2 bis 4 stellen verschiedene Bauvarianten von Getrieben zur Betätigung elektromechanischer Stabilisierungseinrichtungen dar. Diese Getriebe sind jeweils in der Draufsicht gezeigt.

### Beschreibung der Ausführungsbeispiele

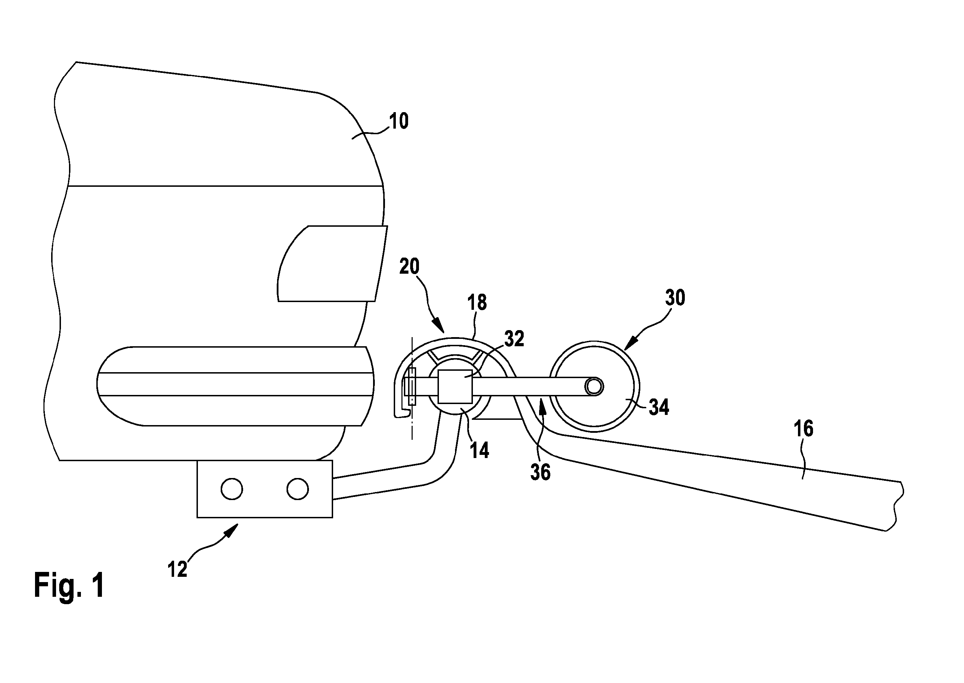

Figur 1 zeigt das Heck eines Zugfahrzeugs 10 mit einer daran verankerten Zugvorrichtung 12. Diese Zugvorrichtung 12 ist konventionell gestaltet und weist an ihrem freien Ende einen Kugelkopf 14 auf. Mit diesem Kugelkopf 14 wirkt ein an einer Deichsel 16 eines nicht dargestellten Anhängers angebrachtes Koppelelement 18 zusammen. Das Koppelelement 18 ist vereinfacht als eine nach unten und zu den Seiten hin offene Kugelkalotte ausgebildet, welche den Kugelkopf 14 der fahrzeugseitigen Zugvorrichtung 12 von oben übergreift. Die Zugvorrichtung 12 und das Koppelelement 18 bilden zusammen eine Anhängervorrichtung 20, die erfindungsgemäß mit einer elektromotorisch betätigbaren Stabilisierungseinrichtung 30 ausgestattet ist. Letztere umfasst eine Reibungskupplung mit Reibbremsbelägen 32, welche auf den Kugelkopf 14 der Zugvorrichtung 12 einwirken. Ein Elektromotor 34 ist dazu vorgesehen, die Zuspannkraft mit der die Reibbremsbeläge 32 gegen den Kugelkopf 14 gepresst werden einzustellen. Der Elektromotor 34 betätigt die Reibbremsbeläge 32 über ein nachgeordnetes Getriebe 36.

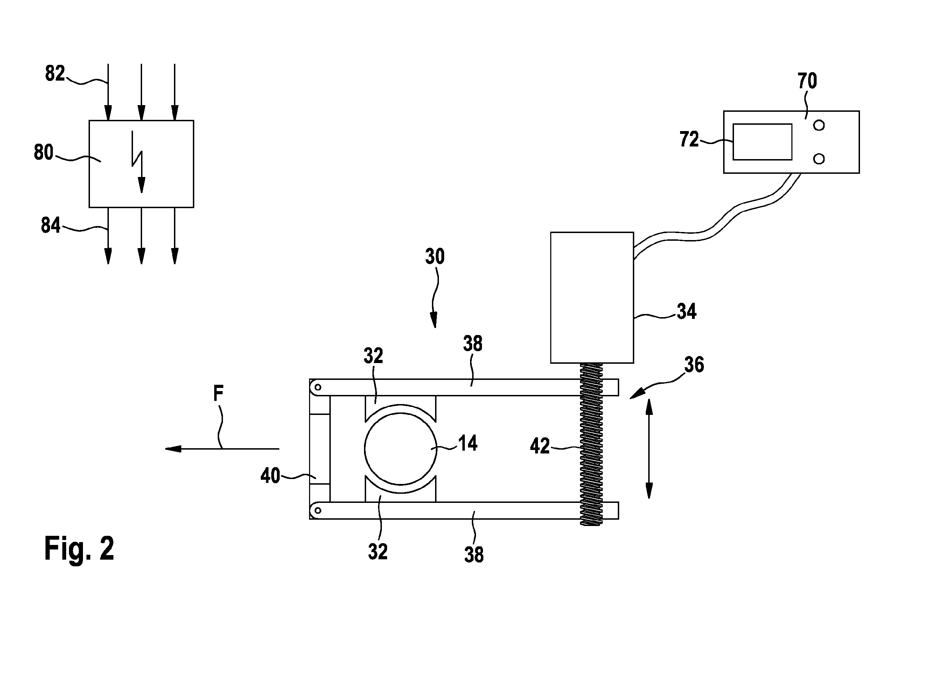

Figur 2 zeigt eine elektromotorisch betätigbare Stabilisierungseinrichtung 30 deren Reibungskupplung Reibbeläge 32 aufweist, die an zwei zueinander parallelen, horizontal verlaufenden Bremshebeln 38 befestigt sind. Die Bremshebel 38 sind an gegenüberliegenden Seiten des Kugelkopfs 14 angeordnet und erstrecken sich in Fahrtrichtung F des Zugfahrzeugs 10. An ihren dem Zugfahrzeug 10 zugewandten ersten Enden sind die beiden Bremshebel 38 gelenkig mit einer Traverse 40 verbunden. Diese Traverse 40 befindet sich zwischen dem Zugfahrzeug 10 und dem Kugelkopf 14 und erstreckt sich quer zur Fahrtrichtung F. Das Getriebe 36 der Stabilisierungseinrichtung 30 umfasst weiterhin eine vom Elektromotor 34 antreibbare Gewindespindel 42. Die über die Traverse 40 miteinander gekoppelten Bremshebel 38 sind in Abhängigkeit der Drehrichtung dieser Gewindespindel 42 spreiz- bzw. klemmbar. Dazu ist die Gewindespindel 42 auf der der Traverse 40 gegenüberliegenden Seite des Kugelkopfes 14 angeordnet und ebenfalls quer zur Fahrtrichtung F des Fahrzeugs 10 ausgerichtet. Die Wirkverbindung zwischen den Bremshebeln 38 und der Gewindespindel 42 kann beispielsweise anhand von Gewindeverzahnungen unterschiedlicher Steigungsrichtungen realisiert sein oder kann auch durch eine drehbare Lagefixierung der Gewindespindel 42 an einem der beiden Bremshebel 38 in Kombination mit einer Gewindeverzahnung zwischen der Gewindespindel 42 und dem jeweils anderen Bremshebel 38 dargestellt sein. Die Verzahnungsgeometrie ist dabei derart gestaltet, dass das Getriebe 36 eine Selbsthemmung in Löserichtung aufweist.

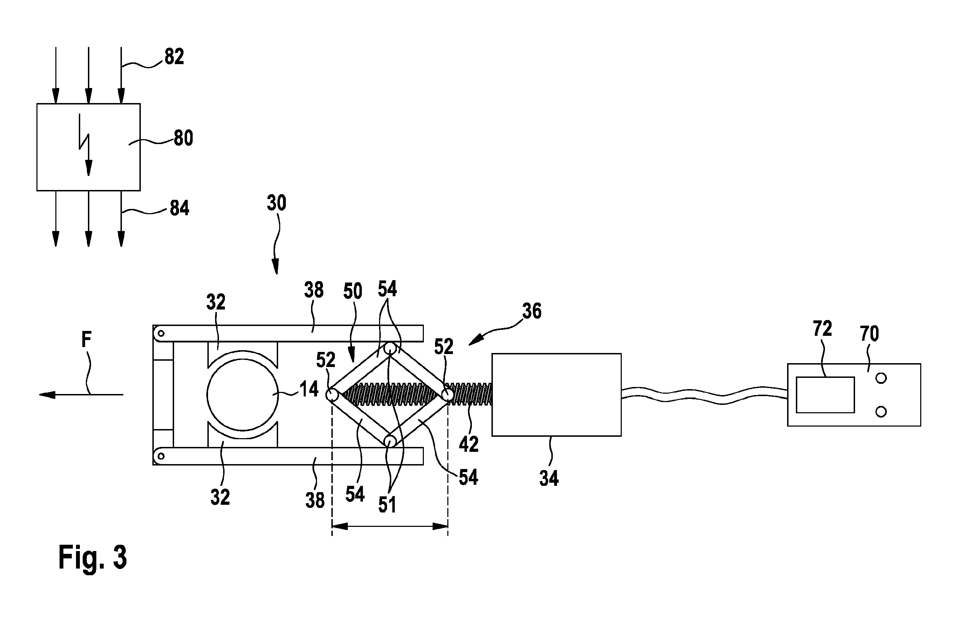

Beim Ausführungsbeispiel nach Figur 3 weist die elektromotorisch betätigbare Stabilisierungseinrichtung 30 eine von einem Elektromotor 34 angetriebene Gewindespindel 42 auf, die in Fahrtrichtung F des Fahrzeugs 10 ausgerichtet ist. Diese Gewindespindel 42 betätigt nunmehr ein Getriebe 36 in Form eines Scherentriebs 50 aus insgesamt vier Gelenken 51,52 und vier Scheren 54. Die Scheren 54 verbinden jeweils zwei Gelenke 51,52 relativ beweglich miteinander, wobei die beiden Gelenke 51 ortsfest an einander gegenüberliegenden Stellen von zwei, Reibbremsbeläge 32 tragenden Bremshebeln 38 angeordnet sind, während die beiden anderen Gelenke 52, beispielsweise mittels Gewindehülsen, axial beweglich auf der Gewindespindel 42 angeordnet sind. Die Gewindehülsen der Gelenke 52 und die Gewindespindel 42 wirken beispielsweise über Gewindeverzahnungen unterschiedlicher Steigungsrichtungen zusammen und lassen sich dadurch in Abhängigkeit der Rotationsrichtung der Gewindespindel 42 aufeinander zu oder voneinander weg bewegen. Mit einer Bewegung der Gelenke 52 auf der Gewindespindel 42 verändert sich der Abstand zwischen ihnen und die Reibbremsbeläge 32 werden mit zunehmender oder abnehmender Zuspannkraft gegen den Kugelkopf 14 gedrückt.

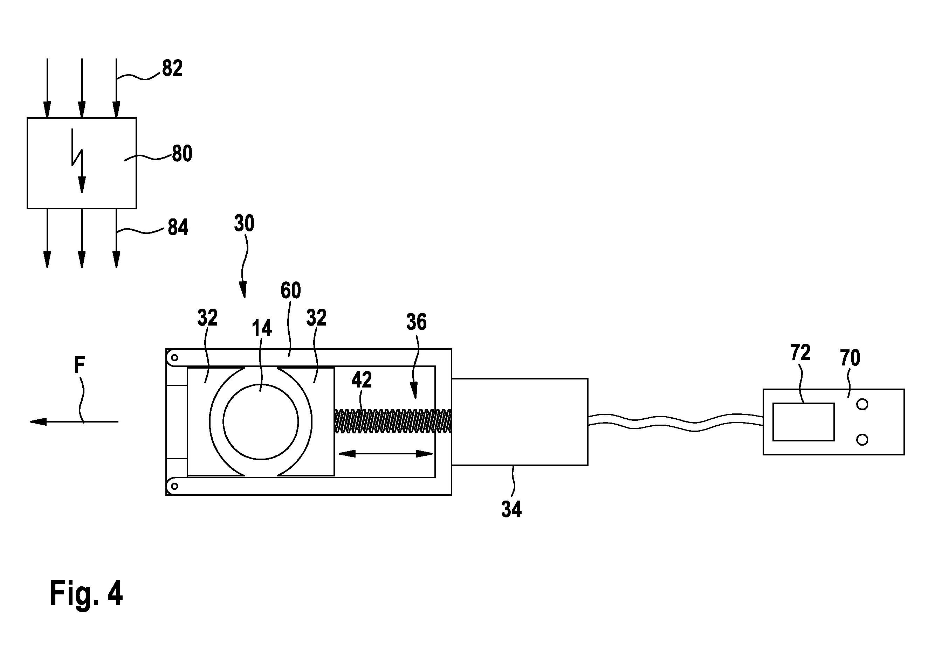

Das Ausführungsbeispiel nach Figur 4 zeigt eine elektromotorisch betätigbare Stabilisierungseinrichtung 30 mit einem beweglich angeordnetem Schwimmrahmen 60. Dieser Schwingrahmen 60 ist exemplarisch rechteckig ausgebildet und umschließt mit Abstand den Kugelkopf 14 einer zugfahrzeugseitigen Zugvorrichtung 12. Am Schwingrahmen 60 ist der Elektromotor 34 fest verankert. Das vom Elektromotor 34 angetriebene Getriebe 36 besteht aus einer Gewindespindel 42, welche durch eine Öffnung an einer Stirnseite des Schwimmrahmens 60 hindurchgeführt ist und auf welcher ein erster Reibbremsbelag 32 beweglich angeordnet ist. Dieser Reibbremsbelag 32 ist innerhalb des Schwimmrahmens 60 seitlich geführt, so dass der Reibbremsbelag 32 durch die Rotationsbewegung der Gewindespindel 42 eine axial in bzw. entgegen der Fahrtrichtung F eines Fahrzeugs 10 gerichtete Translationsbewegung ausführt. Die Bewegungsrichtung erfolgt Abhängigkeit der Drehrichtung der Gewindespindel 42. Sobald der erste Reibbremsbelag 32 gegen den Kugelkopf 14 der Zugvorrichtung 12 anläuft, führt der Schwimmrahmen 60 aufgrund der Reaktionskraft eine Axialbewegung entgegen der Fahrtrichtung F aus. Diese Axialbewegung endet, sobald ein zweiter, dem ersten Reibbremsbelag 32 gegenüberliegender Reibbremsbelag 32 ebenfalls am Kugelkopf 14 anliegt. Bei dieser Getriebebauart sind der Elektromotor 34, die Gewindespindel 42 und die Reibbremsbeläge 32 zueinander koaxial in Fahrtrichtung F des Fahrzeugs 10 ausgerichtet.

Alle beschriebenen Stabilisierungseinrichtungen 30 funktionieren in der Weise, dass mit einer Änderung der Rotationsrichtung des Elektromotors 34 die Stabilisierungseinrichtung 30 zuspannbar oder lösbar ist. In Zuspannrichtung werden Reibbremsbeläge 32 mit ansteigender Zuspannkraft gegen den Kugelkopf14 einer Zugvorrichtung 12 gepresst und damit die Reibungskräfte zwischen dieser Zugvorrichtung 12 und einem Koppelelement 18 erhöht. Umgekehrt lassen sich durch einen Antrieb der Stabilisierungseinrichtung 30 in Löserichtung diese Reibungsverhältnisse verringern.

Die Erfindung ist nicht auf die beschriebenen Gewindespindeltriebe eingeschränkt. Andere Getriebebauformen sind ebenso vorstellbar, beispielsweise Schneckengetriebe oder Zahnrad-/Zahnstangengetriebe. Alle diese Getriebebauarten lassen sich in einer dem Fachmann bekannten Weise durch die Wahl ihrer Verzahnungsgeometrien derart ausgestalten, dass sie in Löserichtung eine Selbsthemmung aufweisen. Dadurch können sich die einmal eingestellten Reibungsverhältnisse nicht selbsttätig, das heißt nicht ohne die elektrische Ansteuerung des Elektromotors 34, verändern.

Zur Bereitstellung eines Ansteuersignals für den Elektromotor 34 kann ein manuell vom Fahrer betätigbares Bedienelement 70, beispielsweise in Form eines elektromechanischen Tasters oder Schalters, vorgesehen sein. Damit lässt sich die Stabilisierungseinrichtung 30 beim Ankoppeln eines Anhängers ohne Kraftaufwand komfortabel betätigen. Zur Visualisierung des eingestellten Zuspannzustands der Stabilisierungseinrichtung 30 kann ergänzend ein Anzeigeinstrument 72 vorgesehen sein.

In einer Ausbaustufe ist es möglich, die Stabilisierungseinrichtung 30 parameterabhängig zu steuern, das heißt die Zuspannkraft der Stabilisierungseinrichtung 30 in Abhängigkeit der variierenden Gespanngeschwindigkeit während des Fahrbetriebs zu verändern. Hierfür wäre ein elektronisches Steuergerät 80 vorzusehen, das Signale 82 erfasst, welche die Gespanngeschwindigkeit repräsentieren und das diese eingehenden Signale 82 zu Ansteuersignalen 84 für den Elektromotor 34 der Stabilisierungseinrichtung 30 auswertet.

Weiterhin ließe sich, beispielsweise durch Erfassung von am Zugfahrzeug 10 und/oder am Anhänger auftretenden Querbeschleunigungen oder Giermomenten durch das elektronische Steuergerät 80 während des Fahrbetriebs, die beschriebene Stabilisierungseinrichtung 30 zu einem automatischen Gespannstabilisierungssystem ausbauen, bei dem die eingestellten Zuspannkräfte diesen Messgrößen entsprechend geregelt werden. Auf die momentanen Reibungsverhältnisse zwischen einer Zugvorrichtung 12 und einem Koppelelement 18 kann über den vom Elektromotor 34 aufgenommenen Strom auf einfache Art und Weise zurückgeschlossen werden.

Selbstverständlich sind Weiterbildungen oder Ergänzungen an den beschriebenen Ausführungsbeispielen denkbar, ohne vom Grundgedanken der Erfindung abzuweichen.

Elektromotorisch betätigbare Stabilisierungseinrichtungen 30 erlauben bspw. Auch eine direkte Überwachung der Reibverhältnisse zwischen einer Zugvorrichtung 12 und einem Koppelelement 18 und können in Abhängigkeit der ermittelten Werte gesteuert oder geregelt werden. Die vorherrschenden Reibverhältnisse lassen sich beispielsweise durch Kraftsensoren feststellen, welche die auftretenden Scherkräfte zwischen den Bremshebeln 38 und den daran befestigten Bremsbelägen 32 erfassen und im elektronischen Steuergerät 80 auswerten. Auch Temperaturschwankungen können anhand von hinterlegten Temperaturmodellen im elektronischen Steuergerät 80 kompensiert werden.

## Patentansprüche

1. Anhängevorrichtung mit Stabilisierungseinrichtung (30) zur Verhinderung und/oder Dämpfung von Schlingerbewegungen zwischen einem Zugfahrzeug (10) und einem damit gekoppelten Anhänger, umfassend eine am Zugfahrzeug (10) vorhandene Zugvorrichtung (12), ein am Anhänger anordenbares und mit der Zugvorrichtung (12) in Wirkungsverbindung verbringbares Koppelelement (18) und eine extern betätigbare und die Reibungsverhältnisse zwischen der Zugvorrichtung (12) und dem Koppelelement (18) beeinflussende Stabilisierungseinrichtung (30),
**dadurch gekennzeichnet,**
**dass** ein extern ansteuerbarer Elektromotor (34) und ein vom Elektromotor (34) angetriebenes, die Stabilisierungseinrichtung (30) betätigendes Getriebe (36) vorgesehen sind, wobei dieses Getriebe (36) in Löserichtung der Stabilisierungseinrichtung (30) eine Selbsthemmung aufweist.

2. Anhängevorrichtung nach Anspruch 1, **gekennzeichnet durch** ein manuell betätigbares Bedienteil (70) zur Erzeugung eines elektronischen Ansteuersignals (84) für den Elektromotor (34).

3. Anhängevorrichtung nach Anspruch 1 oder 2, **gekennzeichnet durch** ein elektronisches Steuergerät (80) zur Steuerung oder Regelung einer Ansteuerung des Elektromotors (34) während des Fahrbetriebs.

4. Anhängevorrichtung nach Anspruch 3, **dadurch gekennzeichnet, dass** das elektronische Steuergerät (80) beispielsweise die Fahrgeschwindigkeit und/oder am Zugfahrzeug (10) und/oder am Anhänger angreifende Querbeschleunigungen oder Giermomente sowie einen zum Elektromotor (34) fließenden Strom erfasst und zu Ansteuersignalen (84) auswertet.

5. Anhängevorrichtung nach einem der Ansprüche 1 bis 4, **dadurch gekennzeichnet, dass** die Stabilisierungseinrichtung (30) eine Reibbremsbeläge (82) aufweisende und auf die Zugvorrichtung (12) einwirkende Reibungskupplung umfasst.

6. Anhängevorrichtung nach einem der Ansprüche 1 bis 5, **dadurch gekennzeichnet, dass** das Getriebe (36) einen Spindeltrieb mit wenigstens einer vom Elektromotor (34) antreibbaren Gewindespindel (42) umfasst.

7. Anhängevorrichtung nach Anspruch 6, **dadurch gekennzeichnet, dass** der Spindeltrieb Reibbremsbeläge (32) tragende und gelenkig mit einer Traverse (40) verbundenen Bremshebel (38) betätigt.

8. Anhängevorrichtung nach Anspruch 6, **dadurch gekennzeichnet, dass** der Spindeltrieb wenigstens einen in einem Schwimmrahmen (60) verschiebbar geführten Bremsbelag (32) betätigt.
